# EUROPEAN PATENT APPLICATION

(11) **EP 3 816 540 A1**
(43) Date of publication of application: **05.05.2021**
(21) Application number: 19800362.6
(22) Date of filing: 07.05.2019
(51) Int. Cl.: F25B 39/02, F25B 30/06

(54) **WATER SOURCE HEAT PUMP**

(30) Priority: 07.05.2018 CN 201810426364
(71) Applicant: Wang, Quanling, Jiangsu 214000 (CN)
(72) Inventor: Wang, Quanling, Jiangsu 214000 (CN)
(74) Representative: Plougmann Vingtoft a/s
(86) International application number: PCT/CN2019/085827
(87) International publication number: WO 2019/214605

(57) **Abstract**

A water source heat pump includes a baffle-free evaporator configured to take in chilled water having a temperature that is not less than 1°C and not greater than 5°C, the chilled water being river water, lake water, or sea water.

## Description

This disclosure claims priority to Chinese patent application No. 201810426364.4, filed on May 7, 2018 with China National Intellectual Property Administration, the disclosure of which is incorporated herein by reference in its entirety.

### TECHNICAL FIELD

The present disclosure relates to, for example, the technical field of water source heat pumps.

### BACKGROUND

In the cold winter of the North, though the temperature drops to as low as -30°C, of the temperature of rivers, lakes, or seas is still above 0°C, and the lowest point is generally above 2°C. As such, rivers, lakes, or seas are good heat sources for water source heat pumps as they contain huge amounts of low-temperature thermal energy. Using river water, lake water, or sea water as the renewable energy of water source heat pumps for heating purposes would be a major technological breakthrough in the field of refrigeration, and has great significance to conservation of fossil energy. It will be another major contribution to the mankind in the field of renewable energy.

In the related art, Sweden plays a leading role in the world regarding the application of seawater source heat pumps, which however need to extract seawater from the deep sea that has a temperature of no less than 7°C in order to operate normally. Otherwise, they would fail. Many places in China, such as Dalian and Shandong Province (Huangdao District), have also had attempted the application of seawater source heat pumps, but all ended in failure. A water source heat pump cannot operate reliably and safely when the temperature of the seawater is lower than 7°C in the cold winter. This is the reason why seawater source heat pumps have not been widely applied. Therefore, the research and development (R&D) of 1-7°C low-temperature water source heat pumps is a cutting-edge technology in the field of refrigeration at home and abroad.

After long-term research, it has been found that the water source heat pump unit and the evaporator of water source heat pump unit in the related art are designed and manufactured based on chilled water of no less than 5°C. When the chilled water is no greater than 2°C in temperature, the pump will shut down for purposes of internal anti-freezing protection. In other words, conventional evaporators of water source heat pumps used in the related art cannot work normally with water of no greater than 5°C in temperature. It is commonly known that in order to improve heat exchange efficiency of shell tube evaporators in the related art, a baffle is disposed on the chilled water side. Chilled water flows around through the water channels of the baffle, thus saving water flow and reducing the power consumption of the water pump. In addition, bypass flow also facilitates chilled water to fully exchange heat with heat exchange tubes, thus improving heat exchange efficiency. The above-mentioned technology can be applied to evaporators used in refrigeration and air-conditioning using chilled water of no less than 7°C in temperature, and is an ideal technical solution and structure. However, it is not suitable for chilled water having a temperature that is not greater than 5°C, especially 1-3°C, which may become the culprit for the failure of seawater source heat pumps using water having a temperature no greater than 5°C. Because river, lake, or sea water is 1-3°C most of the time during the coldest period in winter, in particular the seawater at the seaside is 1-2°C, if such chilled water flows through the baffle many times, it will freeze on the surface of the heat exchange tubes thus being deprived of the heat exchange capacity. Therefore, this is the key to the fact that the evaporator in the related art cannot operate with chilled water of no greater than 5°C. This is also the reason that the water source heat pumps manufactured by the Swedish using conventional evaporators need to build the water intake pipelines dozens of kilometers away in the deep sea for purposes of extracting water having a temperature no less than 7°C. However, as water intake pipelines are built dozens of kilometers away in the deep sea to withstand strong winds and waves of the sea in order to ensure the safety of pipelines, costs of such pipelines are huge, leading to the fact that the seawater source heat pumps in the related art cannot be widely applied. to reduce the investment in the water intake pipeline system of seawater source heat pumps, water intake points must be set up in the shallow water of the sea, to extract seawater of 1-3°C in the seashore during the freezing cold winter, which is supplied to the water source heat pumps as heat source water and ensure its reliable and steady operation.

### SUMMARY

The present disclosure provides a water source heat pump, which can solve the problem that the evaporator of the water source heat pump cannot work normally when chilled water flowing in is less than 5°C in the related art.

An embodiment provides a water source heat pump, including a baffle-free evaporator, the baffle-free evaporator is configured to take in chilled water having a temperature that is not less than 1°C and not greater than 5°C, the chilled water being river water, lake water, or sea water.

### BRIEF DESCRIPTION OF DRAWINGS

FIG.1 is a schematic view of a water source heat pump comprising a baffle-free shell tube evaporator according to an embodiment of the present disclosure.
FIG.2 is a schematic view of a water source heat pump comprising a baffle-free U-shaped tube evaporator according to an embodiment of the present disclosure.
FIG.3 is a schematic view of a water source heat pump comprising a baffle-free vertical pipe flooded evaporator according to an embodiment of the present disclosure.
FIG.4 is a schematic view of a water source heat pump comprising a baffle-free horizontal flooded evaporator according to an embodiment of the present disclosure.
FIG.5 is a schematic view of a water source heat pump comprising a baffle-free spray evaporator according to an embodiment of the present disclosure.
FIG.6 is a schematic view of a water source heat pump comprising a baffle-free coil evaporator according to an embodiment of the present disclosure.
FIG.7 is a schematic view of a water source heat pump comprising a baffle-free evaporator according to an embodiment of the present disclosure.

In the drawings:
1. Evaporator shell; 2. Evaporative heat exchange tube; 3. Secondary refrigerant inlet; 4. Secondary refrigerant outlet; 5. Primary refrigerant inlet; 6. Primary refrigerant vapor outlet; 7. Primary refrigerant spray device; 8. Secondary refrigerant spray device; 9. Variable-frequency secondary refrigerant circulating pump; 10. Baffle-free evaporator; 11. Refrigeration compressor; 12. Condenser; 13, Expansion valve; 14. Water source input end; 15. Water source output end; 16. Heat pump input end; 17. Heat pump output end.

### DETAILED DESCRIPTION

Embodiments according to the present disclosure provide a water source heat pump suitable for water coming from rivers, lakes, or seas. Baffles of evaporators of the water source heat pump are removed as they are in the related art, to prevent chilled water from being easily frozen at extremely low temperature on the surface of heat exchange tubes, heat exchange paths of chilled water is further designed to be as short as possible to shorten the stay of water flow on the surface of heat exchange tubes, to ensure heat exchange efficiency of evaporators; furthermore, the flow rate of chilled water is increased reasonably to reduce water temperature differences when water enters and exits, so as to ensure chilled water in the evaporator operate normally within the range of 1-5°C.

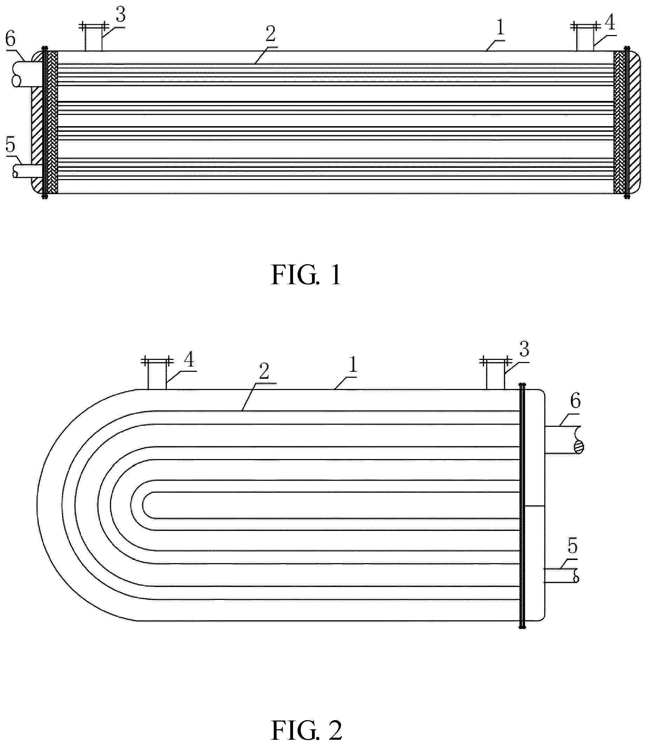

As illustrated in FIG.1, the embodiment provides a water source heat pump comprising a baffle-free shell tube evaporator, which is suitable for water source from rivers, lakes and seas. The baffle-free shell tube evaporator is composed of an evaporator shell 1, an evaporative heat exchange tube 2, a secondary refrigerant inlet 3, a secondary refrigerant outlet 4, a refrigerant inlet 5, and a primary refrigerant vapor outlet 6. In this embodiment, the shell tube evaporator is not provided with baffles. Therefore, after entering through the secondary refrigerant inlet 3, the chilled water flows through quickly and exchanges heat with the evaporative heat exchange tube 2; before freezing, the super-cooled chilled water quickly flows back into the water source from the secondary refrigerant outlet 4. In order to further increase the flow rate and balance of water in the evaporator, a plurality of secondary refrigerant inlets 3 can be configured to ensure that chilled water can evenly pass through the evaporative heat exchange tube 2 for heat exchange without freezing. In this embodiment, the chilled water in this embodiment may come from rivers, lakes, or seas, which will not be described in detail herein.

As illustrated in FIG.2, an embodiment provides a schematic view of a water source heat pump composed of a baffle-free U-shaped tube evaporator. In this embodiment, the evaporative heat exchange tube 2 is configured with a U-shaped tube heat exchange tube, while other structures are consistent with the solution shown in FIG. 1.

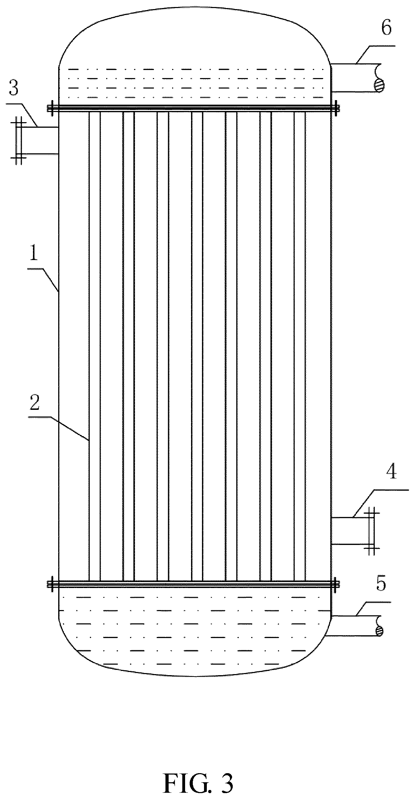

As illustrated in FIG.3, an embodiment provides a schematic view of heat pump composed of a baffle-free vertical pipe flooded evaporator with water sources of rivers, lakes and seas. In this embodiment, the evaporator shell 1 is vertically installed, the evaporative heat exchange tube 2 adopts a vertical finned-tube evaporative heat exchange tube. Refrigerant is supplied through the primary refrigerant inlet 5 during operation. The vertical finned-tube evaporative heat exchange tube is filled with refrigerant and all immersed in secondary refrigerant. Therefore, heat exchange efficiency is high. Chilled water is input through the secondary refrigerant inlet 3 and flows back into water sources from the refrigerant outlet 4. Except for the vertical pipe flooded evaporator, other structures of this embodiment are consistent with the solutions illustrated in FIG. 1.

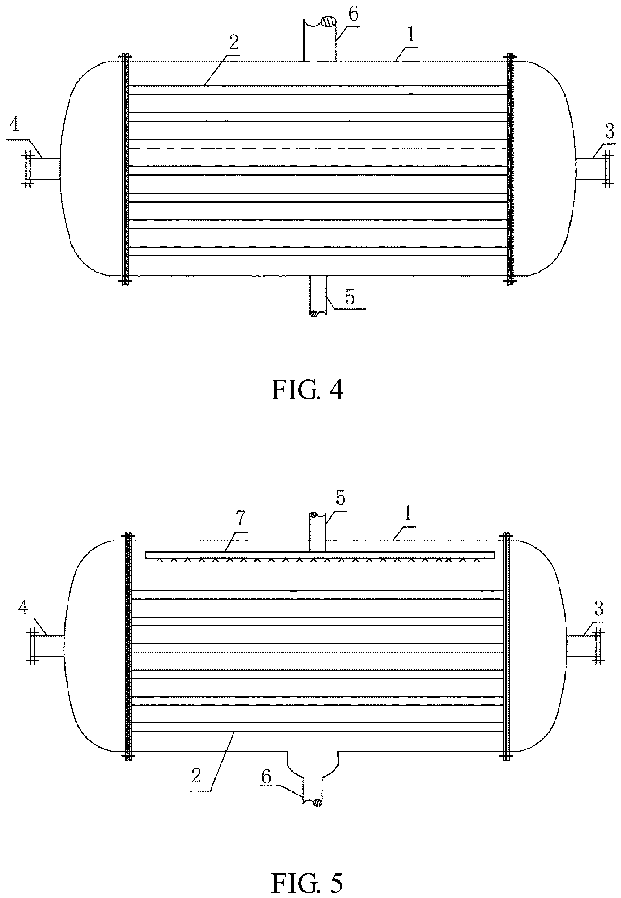

As illustrated in FIG.4, an embodiment provides a schematic view of a water source heat pump composed of a baffle-free flooded evaporator. The evaporator provided in this embodiment is a horizontal flooded evaporator. The refrigerant is supplied through the primary refrigerant inlet 5, and the refrigerant gas is led out from the primary refrigerant vapor outlet 6. During operation, the evaporative heat exchange tube 2 is immersed in the refrigerant. Secondary refrigerant enters the evaporative heat exchange tube 2 from the secondary refrigerant inlet 3 and flows through it, exchanges heat with the refrigerant outside the tubes, and flows out through the secondary refrigerant outlet 4. Other structures are consistent with the solutions illustrated in FIG.1.

As illustrated in FIG.5, an embodiment provides a schematic view of a water source heat pump composed of a baffle-free spray evaporator. In this embodiment, a drenching refrigerant cycle device is configured, the refrigerant is supplied through the upper refrigerant inlet 5, and the refrigerant is uniformly sprayed from the primary refrigerant spray device 7 on the surface of the evaporative heat exchange tube 2 to exchange heat. The vapor is led out from the primary refrigerant vapor outlet 6 below. The advantage of the water source heat pump composed of the baffle-free drenching evaporator is that it saves the amount of refrigerant compared with the flooded evaporator illustrated in FIG. 4. Other structures are consistent with the solutions shown in FIG.4.

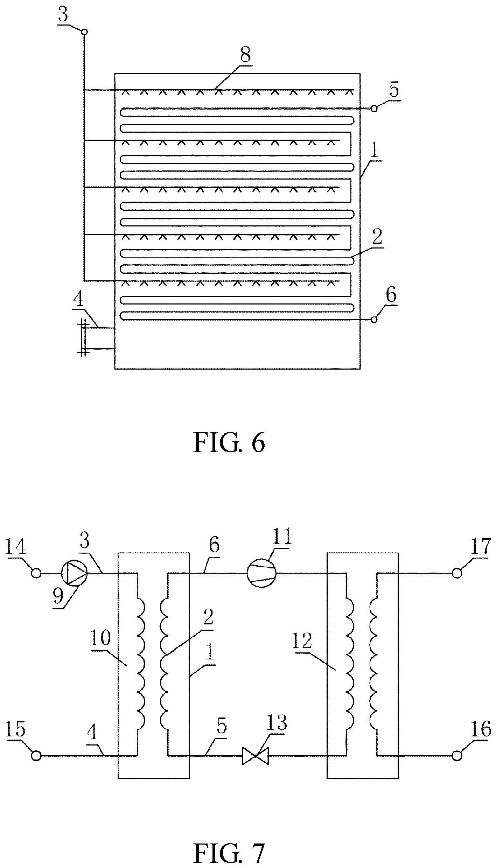

As illustrated in FIG.6, an embodiment provides a schematic view of a water source heat pump composed of a baffle-free coil evaporator. The embodiment is equipped with a coil-type shell tube evaporator. In order to prevent water coming from rivers, lakes, or seas from freezing on the surface of the coil, the embodiment uses a plurality of secondary refrigerant spraying devices 8 with layered and decentralized arrangements to form a layered and decentralized Secondary refrigerant spray device, so as to ensure that water coming from rivers, lakes, or seas will not freeze on the surface of the coil. During operation, the refrigerant is supplied through the primary refrigerant inlet 5, and the vapor is drawn from the primary refrigerant vapor outlet 6 below. Chilled water is input through the secondary refrigerant inlet 3 and flows back into the water source from the secondary refrigerant outlet 4. Other structures are consistent with the solutions illustrated in FIG. 1, which will not be repeatedly introduced.

As illustrated in FIG.7, an embodiment provides a schematic structural view of a water source heat pump composed of a baffle-free evaporator 10. The water source heat pump of this embodiment includes a variable-frequency refrigerant circulating pump 9, a baffle-free evaporator 10, a refrigeration compressor 11, a condenser 12, an expansion valve 13, a water source input end 14, a water source output end 15, and a heat pump input end 16. The refrigeration compressor 11 includes a gas suction end and a gas discharge end.

The secondary refrigerant inlet 3 is coupled to the water source input end 14 through the variable-frequency refrigerant circulating pump 9, the secondary refrigerant outlet 4 is coupled to the water source output end 15, the gas suction end of the refrigeration compressor 11 is coupled to the primary refrigerant vapor outlet 6, and the gas discharge end of the refrigeration compressor 11 is coupled to the first end of the primary refrigerant side of the condenser 12, and the first end of the expansion valve 13 is set to be coupled to the primary refrigerant inlet 5, the second end of the expansion valve 13 is coupled to the second end on the primary refrigerant side of the condenser 12, the water side of the condenser 12 is provided with the heat pump input end 15 and the heat pump output end 17.

During operation, chilled water is input from the water source input end 14, and flows back into the water source from the water source output end 15 through water-side circulation of the baffle-free evaporator 10 via the variable-frequency refrigerant circulating pump 9. Chilled water circulating through the water side of the baffle-free evaporator 10 absorbs heat and evaporates into gas under the action of the refrigerant circulating on the primary refrigerant side of the baffle-free evaporator 10, and the vapor is sucked in from the gas suction end of the refrigeration compressor 11 and compressed into high-temperature and high-pressure gas. After the high-temperature and high-pressure gas is exhausted from the gas discharge end of the refrigeration compressor 11, the heating water circulating through the heat pump input end 16 and the heat pump output end 17 is condensed and released through the primary refrigerant side of the condenser 12. After the water is compressed and heated, it can be used for heating through the heating terminal system. After the high-temperature and high-pressure gas is condensed and released heat, it forms a liquid refrigerant and is throttled by the expansion valve 13, entering the primary refrigerant side of the baffle-free evaporator 10 again, and continues to absorb heat from the water side of the baffle-free evaporator 10. After the refrigerant evaporates into vapor, the refrigerant is compressed again by the refrigeration compressor 11, as the above-mentioned refrigeration compression cycle is repeated, the water can be used for heating after heated by condensation heat.

In the embodiments, to prevent water coming from rivers, lakes, or seas from freezing, the baffle-free evaporator 10 and a variable-frequency refrigerant circulating pump 9 are disposed. Water temperature differences and frequencies of variable-frequency secondary refrigerant circulating pump 9 can be controlled based on the flow rate and temperature differences of the circulating water to further prevent water from rivers, lakes, or seas from freezing on the surface of the evaporative heat exchange tube 2.

The water source heat pumps manufactured using the evaporator in the above embodiments can ensure steady, reliable and safe operation of the water source heat pumps using water sources from rivers, lakes and seas in most parts of the world, making it possible for humans to use renewable energy as a means of heating, which is of great significance from energy and society perspectives.

## Claims

1. A water source heat pump, comprising a baffle-free evaporator (10) configured to take in chilled water having a temperature that is not less than 1°C and not greater than 5°C, the chilled water being river water, lake water, or sea water.

2. The water source heat pump of claim 1, wherein the baffle-free evaporator (10) comprises an evaporator shell (1), an evaporative heat exchange tube (2), a secondary refrigerant inlet (3), and a secondary refrigerant outlet (4), a primary refrigerant inlet, (5) and a primary refrigerant vapor outlet (6).

3. The water source heat pump of claim 2, wherein the secondary refrigerant inlet (3) and the secondary refrigerant outlet (4) are each provided in the number of at least one, and the baffle-free evaporator (10) is a baffle-free shell tube evaporator.

4. The water source heat pump of claim 2, wherein the evaporative heat exchange tube (2) is U-shaped, and the baffle-free evaporator (10) is a baffle-free U-shaped tube evaporator.

5. The water source heat pump of claim 2, wherein the baffle-free evaporator (10) is a baffle-free vertical pipe flooded evaporator.

6. The water source heat pump of claim 2, wherein the baffle-free evaporator (10) is a baffle-free horizontal flooded evaporator.

7. The water source heat pump of claim 2, wherein the baffle-free evaporator (10) is a baffle-free spray evaporator.

8. The water source heat pump of claim 2, wherein the evaporation heat exchange tube (2) comprises at least one set of evaporation heat exchange coils, and the baffle-free evaporator (10) is a baffle-free coil evaporator.

9. The water source heat pump of any one of claims 2 to 8, further comprising a variable-frequency secondary refrigerant circulating pump (9), wherein the baffle-free evaporator (10) comprises a water source input end (14), wherein a first end of the variable-frequency secondary refrigerant circulating pump (9) is coupled to the secondary refrigerant inlet (3), and a second end of the variable-frequency secondary refrigerant circulating pump (9) is coupled to the water source input end (14) .

10. The water source heat pump of claim 2, further comprising a refrigeration compressor (11), a condenser (12), an expansion valve (13), and a variable-frequency secondary refrigerant circulating pump (9), wherein the refrigeration compressor (11) comprises a gas suction end and an gas discharge end, the condenser (12) comprises a primary refrigerant side and a water side, and the baffle-free evaporator (10) comprises a water source input end (14) and a water source output end (15);
wherein the secondary refrigerant inlet (3) is coupled to the water source input end (14) via the variable-frequency secondary refrigerant circulating pump (9), and the secondary refrigerant outlet (4) is coupled to the water source output end (15), the gas suction end of the refrigeration compressor (11) is coupled to the primary refrigerant vapor outlet (6), and the gas discharge end of the refrigeration compressor (11) is coupled to a first end of the condenser (12) on the primary refrigerant side, a first end of the expansion valve (13) is coupled to the primary refrigerant inlet (5), and a second end of the expansion valve (13) is coupled to a second end of the condenser (12) on the primary refrigerant side, and the water side of the condenser (12) is provided with a heat pump input end (16) and a heat pump output end (17).
